Europäisches Patentamt

European Patent Office

Office européen des brevets

(11) Publication number : **0 496 531 A2**

# (12) EUROPEAN PATENT APPLICATION

(21) Application number : **92300380.0**

(22) Date of filing : **16.01.92**

(51) Int. Cl.5 : **G06K 9/32**

(30) Priority : **23.01.91 JP 21471/91**

(43) Date of publication of application :
**29.07.92 Bulletin 92/31**

(84) Designated Contracting States :
**DE FR GB**

(71) Applicant : **International Business Machines
Corporation
Old Orchard Road
Armonk, N.Y. 10504 (US)**

(72) Inventor : **Yamashita, Akio
1-3-17-205 Tajima
Urawa-shi, Saitama-ken (JP)**

(74) Representative : **Blakemore, Frederick
Norman
IBM United Kingdom Limited Intellectual
Property Department Hursley Park
Winchester Hampshire SO21 2JN (GB)**

(54) Method and system for layout analysis of a document image.

(57)    An object of the invention is to precisely detect objects from a document image in layout analysis on the basis of a model with minimal information given to the model. Another object is to sufficiently cope with changes in position and size of the objects with a single model.

A model contains data on spatial relationships of objects, data indicative for each of the objects of whether its existence on a page is mandatory or not, data for each of the objects corresponding to terminal nodes on the number of included character strings, and data for each of the objects corresponding to intermediate nodes on the number of immediate successors. From a document image are extracted not only character string regions 1 to 7 but also separators segmenting the image into objects and sub-separators treated as candidate boundaries. Labels indicative of object names are assigned to the character strings 1 to 7 by using the separators and sub-separators as constraints.

FIG. 5

| 1 | Ti |

| 2 | Ti, Au |

—————————————— SUB-SEPARATOR (w1)

| 3 | N, Au, Af | | 4 | N, Au, Af |

—————————————— SUB-SEPARATOR (w2)

| 5 | Au, Af |

—————————————— SEPARATOR

| 6 | BC-1 | | 7 | BC-2 |

EP 0 496 531 A2

This invention relates to a method and a system for the layout analysis of a document image by using a layout model.

A document filing system using a large capacity optical disk has been brought into practical use. As compared with the conventional paper-based filing, an electrical document database is not only excellent in respect of space saving, easy classification and retrieval, but also has such an advantage that advanced information retrieval can be conducted by making relationships between discrete pieces of information or constructing a concept thesaurus of information. Commercial filing systems, however, do not necessarily meet all these requirements. Most systems store a digitised image for each page and rely on individual operators for assignment of an index or key word to the image. Therefore, they have no substantial difference from the conventional paper-based filing regarding the function of storing of information. Each document image is stored as a mere picture but not as an accumulation of information.

In order to establish an advanced filing system, it is essential to extract the contents of a document from a document image. Character recognition technology has almost come to the period of maturity. Regarding recognition of a printed document containing Kana and Kanji characters, there is no system that can perfectly read multifonts; however, commercial systems are available which can read them at a high rate exceeding 98% under some limitations. As to reading of a printed document, the segmentation of the document into character areas and figure areas as well as the determination of the reading order before recognition processing are important but difficult problems. In order to make an advanced information retrieval possible, there is the need for layout understanding which segments a document image not only into character areas and figure areas but also into semantically uniform areas, and identifies respective areas as objects on a page, such as title, author, body, and so on.

There are several existing approaches to layout understanding as referred to below.

(A) An early research approach extracts properties from a document image and segments the document into character areas and figure areas on the basis of their distribution and regularity; and another, intended for documents like newspaper articles described according to a special rule, uses the rule to segment the articles (for example, K. Inagaki, T. Kato, A. Hiroshima, and T. Sakai: "MACSYM: A Hierarchical Image Processing System for Event-Driven Pattern Understanding System", Proc. 7th Int. Conf. Pattern Recognition, pp. 512-614, 1984).

(B) In order to subdivide a character area into objects, the Format Definition Language has been developed and used (for example, Tono, Fujisawa, Nakano, and Ejiri: "FDL: Form Definition Language based on a Frame Representation and Its Application for Document Understanding", IEICE Tech. Res. Rep. PRU86-31, 1986).

(C) Another research approach executes recognition of objects by matching them with a tree-structured model including geometric information on their positions (for example, A. Dengel and G. Barth: "High Level Document Analysis Guided by Geometric Aspects," Int. Journal of Pattern Recognition and Artificial Intelligence, 2, 4, pp. 641-655, 1988; and Nishimura, Takahashi, and Kobayashi: "Index Extraction from Document Images Based on Tree Structured Model," IEICE Tech. Res. Rep. PRU89-34, 1989).

(D) Another uses a rule-based expert system as a frame (for example, Kise, Sugiyama, Babaguchi, and Tezuka: "Layout Model Based Analysis of Document Structure," Trans. IEICE, vol. D2-72, no.7, pp.1029-1039; and D. Niyogi and S.N. Srihari: "A Rule-Based System for Document Understanding System," Proc. AAAI, pp.789-793, 1986).

The (A) method which uses rules specialised for newspapers and it is therefore difficult extend it to general documents. In particular, layout understanding intended for newspapers has absolutely lost its utility in these days because the preparation of newspapers, done by phototypesetting formerly has been computerised.

The (B) method, which defines the Format Definition Language, and the (D) method, which describes all of positions of objects and extraction procedures would be widely available because once Format Languages or rules are described, they can analyse any document. However, definition of a format is complicated and poor in flexibility, and a detailed description for each page of the document would not be practical.

In the (C) method of Dengel, a user gives a simple tree-structured layout model of objects and the system executes analysis on the basis of the model. This approach is applicable to many kinds of documents, and the description of the model is easier than those by the (B) and (D) methods. However, the (C) method incorporates information on coordinates of the objects on a page into the tree-structured model and uses it positively. It is therefore weak at varieties in size and positional deviations of objects, and may require multiple models even for the same kind of documents.

Further, the method of Nishimura et al. uses DP matching in the process of matching with the model. It is also intended only for objects arranged one-dimensionally or sequentially, such as titles and authors. If this method is extended to analysis of a document such as a table or a patent gazette in which objects are arranged two-dimensionally, then enormous calculation will be needed.

A feature common to all these layout understanding methods is the need for giving knowledge (model) on objects of a document for its analysis. Note that it is impossible to prepare an enormous number of models beforehand to cope with every document and, hence, users must describe a model in accordance with a document to be processed. The (B), (C) and (D) methods attempt to specify a model by giving a large amount of information including positional information on objects so that the same approach might be applied to object detection for images of various documents from a general unformatted document to a document with a special format such as a table. However, the more the information to be specified, the more difficult for the user to specify a model.

Moreover, objects appearing in actual documents of the same kind are likely to vary in position and size. Nevertheless, the more detailed the description of a model, as in the existing methods, the narrower the coverage of document images by one model. In order to cope with such variations, the existing methods necessitate the specification of two or more models for the same kind of documents.

There is, therefore, a need to precisely detect objects from a document image with a minimal information given as a model in a top-down manner.

A method is needed for layout analysis in which a single model can widely cope with variations in position and size of objects and to make it possible to analyse the layout of documents having completely different formats by merely changing the model given.

The present invention now provides a method for the layout analysis of an input document image comprised of objects arranged in a hierarchical tree structure, the method comprising:-

(a) registering a layout model representing spatial relations of objects in a model document;

(b) extracting character string regions from the input document image;

(c) detecting separators and generating data on their positions, said separators being white and/or black regions satisfying predetermined conditions;

(d) segmenting said document image into tree-structured sub-areas by using said separator data and

(e) matching said character string regions with said layout model by using separators as boundaries.

The present invention further provides a system for the layout analysis of an input document image comprised of objects arranged in a hierarchical tree structure, the system comprising:

(a) means to register a layout model representing spatial relations of objects in a model document.

(b) means to extract character string regions from the input document image,

(c) means for detecting separators from said document image and generating data on their positions, said separators being white and/or black regions satisfying predetermined conditions;

(d) means for segmenting said document image into tree-structured sub-areas by using said separator data and

(e) means for matching said character string regions with said layout model by sing said separators as boundaries.

Since this method fully uses bottom-up information obtained from a document image, analysis is possible with a small amount of information given as a model in a top-down manner. Therefore, it makes the description of a model much easier, and permits a single model to cover a wide range of document images because constraints described in the model are decreased.

For analysis of an image, fully reliable separators and less reliable sub-separators may be extracted separately. Candidate object labels assigned to a character string region are reduced by using information on separators, which are considered to be definite object boundaries. Thus explosive generation of assignment patterns of object labels for character string regions is precluded. In determining the object boundaries finally, the cost function incorporating information on sub-separators is used. Thus the system attains both efficiency and accuracy of layout understanding.

In extreme cases, no separators might be detected from a document image; nevertheless, a proper analysis result can be obtained from the layout model and data on sub-separators although the efficiency of relaxation method is somewhat bad.

## BRIEF DESCRIPTION OF THE DRAWINGS

Fig. 1 is a diagram showing an arrangement of nodes of a layout model;
Fig. 2 is an explanatory diagram of data stored in nodes;
Fig. 3 is a flow chart showing layout understanding process;
Fig. 4 is an explanatory diagram of separators and sub-separators;
Fig. 5 is an explanatory diagram of vertical labelling;
Fig. 6 is an explanatory diagram of a layout model for analysis of the image shown in Fig. 5;
Fig. 7 is an explanatory diagram of horizontal labelling;

3

Fig. 8 is an explanatory diagram of a layout model for analysis of the image shown in Fig. 7; and
Fig. 9 is an explanatory diagram of a layout model used in an experiment.

Explanation of reference numerals:

S1 and S2: separators; and
SSP-A, SSP-B, and SSP-C: sub-separators.

Layout Model

In layout understanding, objects are generally represented as rectangles enclosing character strings. The layout of a document image is generally defined as a hierarchical model in which rectangles enclosing objects are nested horizontally or vertically. The embodiment is also based on the existing representation of objects and the definition of models.

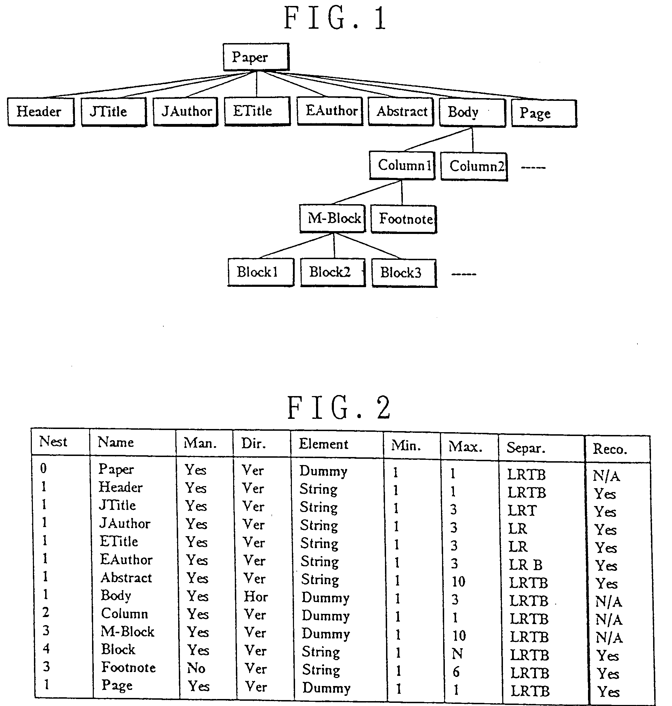

Fig. 1 shows a layout model of the front page of a paper. Each node corresponds to one of objects on the front page and stores attribute parameters on a rectangle to which the label of the object can be assigned. In the tree as shown in Fig. 1, nodes in the same level are arranged in accordance with the horizontal or vertical order by which the objects of the nodes appear on a page. The successors of a node represent sub-rectangles formed by horizontal or vertical division of the rectangle of the parent node.

In the same kind of documents, objects do not vary in logical arrangement of objects but may vary in physical position and size from page to page. In order to absorb such changes that a particular object is present or not on an actual page, a parameter is stored for each node on whether the object of the node appears necessarily on the layout. Additionally, in order to absorb changes in number of lines included in objects on an actual page, parameters are stored for each non-terminal node (leaf node, for example, "Body" of Fig. 1) for the horizontal or vertical direction in which the objects represented by its successors are arranged, and for minimum and maximum numbers of them. Parameters are also stored for each terminal node (for example, "Header" in Fig. 1) for the horizontal or vertical direction in which character strings included in the object are arranged, and for minimum and maximum number of them. In order for labels of objects to be assigned to character string regions, that is, to carry out labelling accurately and quickly, it is preferable to store a parameter for each terminal node on whether a separator, which definitely segments it from a neighbouring object, necessarily exists on the top, bottom, left, and right of the object represented by the node.

Information held by a model is summarised as follows:
(1) relative spatial relationships among objects on a page (layout tree);
(2) whether the existence of an object is mandatory or not;
(3) maximum and minimum numbers of objects represented by successors of a non-terminal node, and maximum and minimum numbers of character strings included in an object represented by a terminal node; and
(4) whether a separator exists on the top, bottom, left, and right of the object represented by a terminal node
(Note, however, that labelling is possible without this parameter).

Fig. 2 represents information set in nodes of the model as shown in Fig. 1 in a table. "Nest" shows the level of the tree, and "Man." indicates whether the existence of the object represented by the node is mandatory (Yes) or not (No). "Dir." indicates, for a non-terminal node, whether the objects represented by the successor nodes are arranged horizontally (Hor) or vertically (Ver) and, for a terminal node, whether character strings included in the object represented by the node are arranged horizontally (Hor) or vertically (Ver). "Element" means the node is a non-terminal node (Dummy) or a terminal node (String) of the layout tree. "Min. and "Max." indicate, for an intermediate node, minimum and maximum numbers of objects represented by the successor nodes and, for a terminal node, minimum and maximum numbers of character strings included in the object represented by the node. Note that according to the character string counting as will be referred to later, "Min." and "Max." substantially indicate, for a terminal node, minimum and maximum line numbers on a page for the object corresponding to the node. "Separ." indicates whether the existence of a separator is mandatory or not on the left, right, top and bottom (L, R, T and B) of the object of the node. It is sufficient to store the parameter on separators in at least the terminal nodes; however, the embodiment stores them in the non-terminal nodes as well. Parameter on a separator of a non-terminal node is automatically determined by those of the terminal nodes which are direct or indirect successors of the non-terminal node.

The embodiment also stores parameter for each node on an item "Reco." in addition to the parameters (1) to (4). This indicates whether character recognition processing should be done (Yes) or not (No) for the object represented by the node after the layout analysis.

As described above, the model does not require coordinate information to be specifically defined for position and size of an object on a page. If specific information on position on a page such as character size and font is given, more accurate labelling (assignment of an object label to a rectangle) is possible. In most cases, however, labelling is possible with the above-indicated information. The definition of a model is simplified as much as possible that rectangles can be labelled on the basis of minimal information, that is, the direction of arrangement and the range of the number of the included objects or character strings.

A known method that uses, for example, a graphic editor to describe a tree structure may be employed for preparation of tree-structured data. The tree structure containing those data is created and stored in a storage apparatus.

Method for Analysis

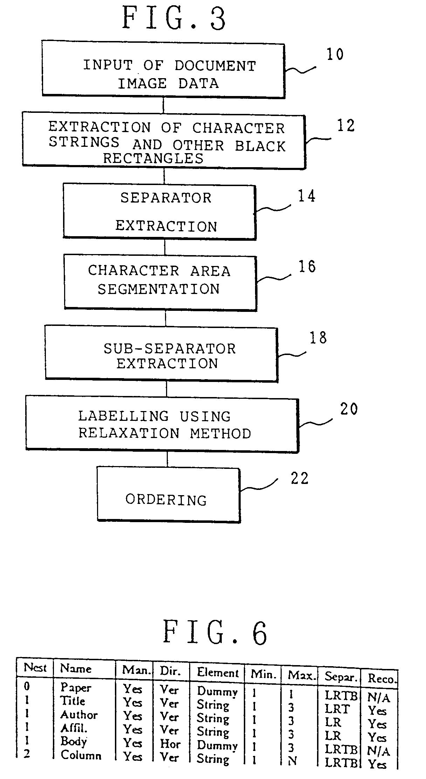

Fig. 3 schematically shows a layout understanding process. First, document image data is inputted to a system for layout analysis (step 10). The document image data may be generated by a scanner, or alternatively, it may be retrieved from an existing image database. Then character strings, vertical and horizontal ruled lines, and other black pixel regions are extracted as rectangles from the document image, and their coordinate data are then generated (step 12). Later processing is carried out on the basis of these coordinate data of the extracted rectangles. Long and wide white regions and long black lines that separate objects (separators) are extracted by using the coordinate data of the extracted rectangles (step 14). After figure areas are removed, character areas are roughly segmented by using the extracted separators (step 16). In each character area resulting from the segmentation, candidate boundaries (sub-separators) of objects are detected from changes in line pitch and character size, and their coordinate data are then obtained (step 18). The processing until this step is commonly carried out for all document images regardless of their models. Labels indicative of object names are assigned to character string rectangles on the basis of the information obtained directly from the image and the layout model. In labelling, if some labels are assigned inconsistently with the area structure obtained previously, such labels and related paths (label assignment patterns) are eliminated by a relaxation method (step 20). If multiple labels are assigned to a rectangle after it has been consistently labelled, each possible label assignment pattern is investigated to calculate the confidence value, and the most appropriate one is determined (step 22). If there are multiple models to be matched with the document image, steps (20) and (22) are executed to obtain the appropriate label pattern and its confidence value for each model. Then, the most likely label assignment pattern is determined. Steps (12) to (22) of the process are detailed below.

Character String Detection (step 12)

According to known neighbouring black pixel region connecting method and black run length combining method, it is possible to extract character strings, ruled lines and other black pixel regions as rectangles from a document image and to generate their coordinate data. By using methods disclosed in, for example, JA PUPA 1-253077 and T. Amano et al.: "Method for character string detection," IBM Technical Disclosure Bulletin Vol. 33, No. 4, pp. 141-142 (Sept. 1990), the rectangles whose (vertical) widths and (horizontal) lengths fall in a certain range are recognised as character string regions, those having widths not larger than a certain threshold and lengths not less than a certain threshold are recognised as horizontal ruled line regions, and those having widths not less than a certain threshold and lengths not larger than a certain threshold are recognised as vertical ruled line regions.

Separator Extraction (step 14)

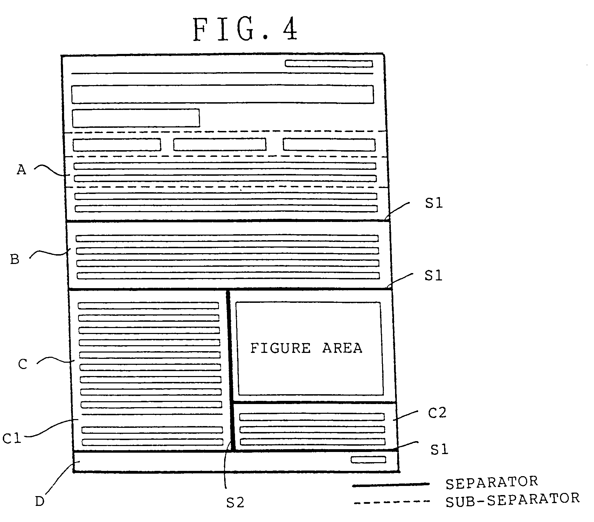

Rectangles enclosing white pixel regions are extracted on the basis of the rectangle data of character strings, vertical and horizontal ruled lines, and so on. After neighbouring white pixel rectangles having substantially the same height are integrated, all rectangles whose lengths and widths reach predetermined values are registered as vertical or horizontal separators. More specifically, vertical separators extending from the top to the bottom of an image are detected, and data on their positions are obtained and registered. Next, horizontal separators whose opposite ends contact the extracted vertical separators are detected, and data on their positions are obtained and registered. Then, vertical separators whose opposite ends contact the extracted horizontal separators are detected, and data on their positions are obtained and registered. In this way, vertical and horizontal separators are extracted in alternate and recursive fashion. For example, separators, whose approximate positions are shown by bold lines for convenience, are extracted from the page shown in Fig. 4. Subsequently to, or in parallel with, the foregoing steps, vertical or horizontal black ruled lines that are not shorter than a threshold are also registered as separators.

5

It is required that separators be sufficiently wide and long to separate objects highly reliably so that errors in area segmentation in the next step may be prevented. Threshold values for widths and lengths are selected from this viewpoint, and it is recommendable to investigate distribution of sizes of white pixel rectangles in document images of the same kind in determining appropriate values.

Rough Area Segmentation (step 16)

A character area is segmented on the basis of data on vertical and horizontal separators. Prior to the segmentation, figure areas are detected relying on the distribution of the extracted separators and rectangles and excluded out of the processing. As already known, figure areas and character areas can be separated by using properties such as complexity of black pixel distribution, and so on.

Segmentation of character area is executed as explained below. First, if the whole image excluding figure areas can be partitioned into two or more sub-areas by vertical separators, it is subdivided. Next, if a horizontal separator can subdivide any one of the sub-areas resulted from the segmentation, it is further divided into smaller partitions. In this way, by using vertical and horizontal separators alternately, the whole image is divided recursively and nested areas forming a tree structure are extracted. In the example shown in Fig. 4, the character area is first divided into sub-areas A, B, C, and D by using separator S1. Then the sub-area C is sub-divided into smaller areas C1 and C2 by using separator S2.

Sub-separator Extraction (step 18)

In this step, for each character string rectangle in each area resulted from the division, data on the character size of the character string rectangles and base lines representing them are generated. Next, a character string that is different in character size from the immediately precedent one is detected. Then, a white region above the detected character strings is detected as sub-separator and data on its position are registered. Subsequently or concurrently, pitch data is generated for each white region between vertically successive character strings, then a white region whose pitch is different from immediately precedent one is detected as horizontal sub-separator, and its positional data are registered. If any white region that separates two groups of character strings extending vertically and regularly and has a size smaller than a separator but not less than a threshold is detected, it is registered as a vertical sub-separator. For example, from the page shown in Fig. 4, sub-separators, whose approximate positions are shown by broken lines for convenience, are extracted. Sub-separators complement separators as object boundaries. Therefore, conditions for the detection of them need not be so strict as required for separators. Redundant candidates may be registered.

Labelling Using Relaxation Method (step 20)

In this step, possible labels are assigned to character strings in accordance with the layout model, by using spatial relationships among the extracted character string rectangles and separators as constraints Specific constraints are as follows:

(a) spatial relations among labels and the numbers of labels are consistent with topological relations among nodes in the layout model and Min. and Max. data.

(b) the same label does not continue beyond a separator. (Note, however, in order to cope with erroneous detection of separators, the same label is permitted to continue beyond a separator if no other label is assigned appropriately).

(c) if the model contains data on whether a separator around an object is mandatory or not, the label assignment should be consistent with the data.

Discrete relaxation method, in general, first assigns all possible labels satisfying monomial restrictions to each object, and a contradictory combination of labels is then eliminated by using relevant restrictions. Here, however, only labels that satisfy all conditions (a) to (c) are assigned to character string rectangles from the labelling process.

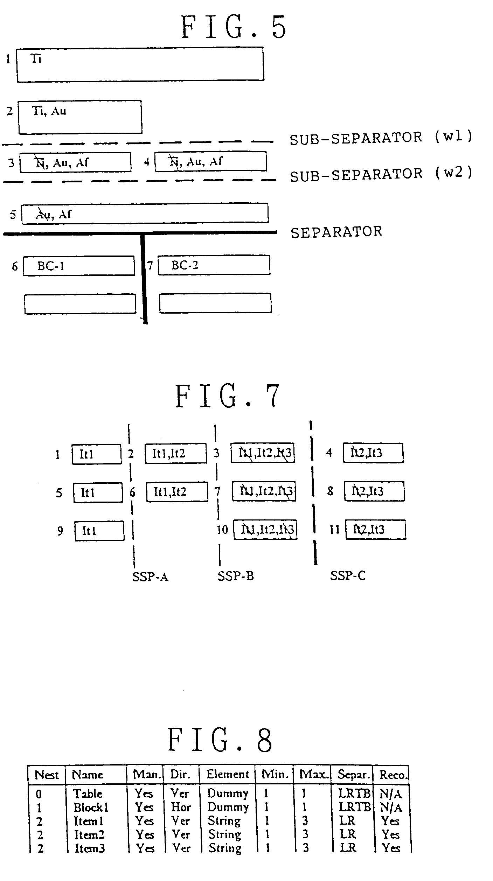

A specific example of vertical labelling is explained with reference to Figs. 5 and 6. Fig. 5 shows character string rectangles actually obtained from the image of the first page of a paper, and Fig. 6 shows part of its defined layout model. (Illustration of a separator located above character string 1 and enclosing the entire page is omitted in Fig. 5) Labels are assigned to appropriate character string rectangles sequentially from the upper left node in the tree structure of the layout model. Specific assignment process is described below.

(i) According to the layout model, the object located at the top of the page and other than 'dummy' is 'Title', which consists of one to three vertically successive character strings. Therefore, character strings 1, 2, and 3 are labelled Ti.

Labelling to a character string 4 is explained. The character string 4 is located to the right of the character string 3 labelled Ti. The reference to the node 'Paper' which is the parent of 'Title' reveals its 'Dir' data to be 'Ver'. That is, the next object 'Author' must be located below 'Title'. Therefore, the character string 4, in this case, has to be labelled Ti. This means that the character string 4 should have been integrated with the character string 3. Therefore, although the character string 4 is labelled Ti, the count of character strings for the label Ti is not incremented. It is a merit of the invention that the possibility of (virtual) integration of character strings can exactly be determined on the basis of the model and data on separators.

(ii) According to the layout model, the next object 'Author' is arranged under 'Title' and consists of one to three vertically successive lines. Since Ti may possibly be assigned up to the character string 4, label Au is assigned to character strings 2, 3, 4, and 5. If label Au is assigned to the character string 3, the same label has to be assigned also to the character string 4, although the character strings are counted as one, as described in (i). From the viewpoint of spacial relations, immediately succeeding character strings 6 and 7 can also be labelled Au. Since, however, two areas partitioned by a separator, character strings 6 and 7 are not labelled Au according to the rule (b) defining that the same label does not continue beyond a separator.

(iii) Similarly, label Af of the next object 'Affiliation' is assigned to character strings 3, 4, and 5. Since label Au has been assigned to the character string 5, consideration must be taken on the possibility that the object 'Author' terminates there and the object 'Affiliation' starts from the character strings 6 and 7 which are in a different area isolated by the separator. The succeeding terminal node teaches that a separator must exist above the object 'Body-Column', that is, objects 'Title' to 'Affiliation' must be contained within a single area whose bottom is partitioned by a horizontal separator. Therefore, label Af is assigned up to the character string 5.

Labelling is continued for the object 'Body-Column'. In order to satisfy the restriction (c), a 'Body-Column' located at the left end on a page (let its label be BC1) must start from the character string 6. Therefore, the label of the character string 6 is determined to be BC1. In response to the determination of the label for the character string 6, the number of previously assigned labels of character strings 1 to 5 can be reduced by the relaxation method. When only one label is assigned to a character string, previously assigned character strings with multiple labels are investigated and contradictory labels are eliminated. In the example shown in Fig. 5, the character string 5 must be assigned as Af, because the label for the character string 6 is determined to be BC1. Additionally, since the existence of the object 'Author' is mandatory, it is determined that labels for the character strings 3 and 4 are other than Ti. In this way, consistent labels are assigned to all character strings while repeating labelling and relaxation.

Next explanation is directed to a specific example of horizontal labelling with reference to Figs. 7 and 8. Fig. 7 shows character string rectangles obtained from an actual document image, and Fig. 8 shows part of its defined layout model for the page (Fig. 7 omits illustration of a separator located above character strings 1, 2, 3, and 4 and enclosing the whole page).

The layout model defines three objects arranged vertically as having character strings as immediate successors and having separators to their right and left. From this image, however, no separator has been extracted between character strings. In the event a requisite number of separators have not been extracted, sub-separators are used as boundaries of objects. Assume that sub-separator (SSP) C in Fig. 7 has a width (horizontal length) exceeding a predetermined value while widths of sub-separators A and B do not reach the value. Then, the sub-separator C is more likely to be a boundary between objects than other sub-separators. Besides, the definite treatment of sub-separator C as a separator does not cause the superfluity of separators in the image shown in Fig. 7. The sub-separator C is therefore regarded as a separator in the following processing.

The layout model shows that the existence of the object 'Item1' is mandatory and it is located to the left of objects 'Item2' and 'Item3'. The label It1 for 'Item1' is therefore assigned to character strings 1, 5, and 9 which have the same vertical sub-separator SSP-A to their right. At this moment, however, it is not determined whether the sub-separator A or B should be treated as a separator. That is, character strings 1, 2, and 3 might be integrated into a single character string rectangle. Thus the character strings 2 and 3 are also labelled It1 for the present. Such labelling is permitted as explained for 'Ti' in (i) above. Similarly, character strings 6, 7, and 10 are also labelled It1 for the present. Character strings 4, 8 and 11 are not labelled It1 because of the rule (b).

Since the layout model defines the object 'Item2' as necessarily appearing to the right of the object 'Item1', the label It2 is assigned to character strings 2, 6, 3, 7, and 10. Assuming that the object 'Item1' continues up to the character strings 3, 7, and 10, character strings 4, 8 and 11 might be included in the object 'Item2'. Therefore the label It2 is assigned to them for the present.

Since the layout model defines the object 'Item3' as necessarily appearing to the right of 'Item2', character strings 3, 7, 10, 4, 8, and 11 are assigned the label It3. Since there is no object defined to the right of 'Item3' in the model, character strings 4, 8, and 10 should have only the label It3 because of the rule (b). Thus, previous candidate labels are eliminated by relaxation method. The labels for character strings 3, 7, and 10 are immediately determined to be lt2 by the relaxation method, because the assignment of the label lt1 to the immediate left of lt3 is contradictory to the model.

Ordering (step 22)

In the consistent labelling step, the candidate labels for a character string rectangle are not necessarily reduced to the single most likely one. In the examples shown in Figs. 5 and 7, some character strings still have multiple candidate labels. Therefore, the ordering of the label assignment patterns is executed by using a cost function for estimating for each label assignment pattern how the changes of label coincide with separators or sub-separators. For example, the available label assignment patterns (paths) for character strings 1, 2, 3, 4, and 5 shown in Fig. 5 are as follows:

$$Ti\text{-}Ti\text{-}(Au\text{-}Au)\text{-}Af \quad (1)$$
$$Ti\text{-}Au\text{-}(Au\text{-}Au)\text{-}Af \quad (2)$$
$$Ti\text{-}Au\text{-}(Af\text{-}Af)\text{-}Af \quad (3)$$

In the embodiment, the following formula is used as a cost function calculating the confidence value:

```
Fn = C1 + C2 + --- + Cn - 1

Cn = if Ln != Ln + 1  &  Sep  : +w

                         None : -p

      if Ln == Ln + 1  &  Sep  : -w

                         None : +p

                         Same :  0
```

```
==     :  Equal

!=     :  Not equal

n      :  nth character string

Fn     :  Cost function

Cn     :  Cost between the nth and (n+1)th character strings

Ln     :  Label for the nth character string

Sep    :  A sub-separator exists between the nth and (n + 1)th
          character strings.

None   :  No sub-separator exists between the nth and (n +1)th
          character strings.

Same   :  The nth and (n + 1)th character strings are in the same line.

w      :  Horizontal (or vertical) width of a sub-separator

p      :  Penalty
```

As shown in Fig. 5, there are horizontal sub-separators between character strings 2 and 3, and character strings 3 and 5. Let the heights of the sub-separators be w1 and w2, respectively. The value of the cost function for each assignment pattern is as follows:

$$(1) - p - w1 + 0 - w2 = - w1 - w2 - p$$
$$(2) + p + w1 + 0 - w2 = + w1 - w2 + p$$
$$(3) + p - w1 + 0 + w2 = - w1 + w2 + p$$

Therefore, the assignment pattern (1) is the most likely one.

In the example shown in Fig. 7, the cost function is defined on the basis of the existence of a vertical separator and its width in a similar way. By using the cost function, the character strings 2 and 6 can be determined to be lt1 or lt2.

If labels for the character strings 2 and 6 are determined to be lt2, later character recognition processing is naturally carried out in the order of character strings 1, 5, and 9 for the object 'Item1'. In contrast, if labels for the character strings 2 and 6 are determined to be It1, later character recognition processing is carried out in the order of character strings 1, 2, 5, 6, and 9 for the object 'Item1'.

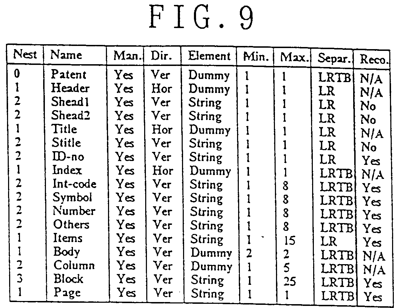

Finally, experimental data on layout understanding conducted for the first pages of Japanese published unexamined patent publications is introduced below. The defined layout model is shown in Fig. 9. As to the processing speed by a personal computer (CPU was Intel 80386, 20 MHz), it only took about 10 seconds to extract character string regions from an image of 2400 x 3600 dots scanned by 300 pel/inch and an average time less than 1 second for later processing (extraction of separators and sub-separators, area segmentation, labelling and relaxation, and ordering).

Effect of the Invention

According to the invention, segmentation of a document image into objects is possible without strict specification of coordinate positions or the like for objects on a model. Therefore, description of a model is easy. Further, a single model can sufficiently cope with changes in position and size of objects. Therefore, not only the same kind of documents can be analysed with a single model, but different kinds of document images can also be processed with the same model only if the order of their objects and spatial relationships are the same. Additionally, any document image having any vertical or horizontal arrangement of objects, can be processed, once a model is described for it.

**Claims**

1. A method for the layout analysis of an input document image comprised of objects arranged in a hierarchical tree structure, the method comprising:-
   (a) registering a layout model representing spatial relations of objects in a model document;
   (b) extracting character string regions from the input document image;
   (c) detecting separators and generating data on their positions, said separators being white and/or black regions satisfying predetermined conditions;
   (d) segmenting said document image into tree-structured sub-areas by using said separator data and
   (e) matching said character string regions with said layout model by using separators as boundaries.

2. The method of claim 1 further comprising the steps of detecting sub-separators within each of said sub-areas and generating data on their positions, said sub-separators being white regions satisfying predetermined conditions different from said separators, the matching of character strings with the layout model employing the sub-separators as boundary candidates for objects.

3. The method according to claim 2 including the steps of generating data on character size for each character string region, detecting a character string region that is different in character size from the immediately precedent character string region, and detecting a white region above the detected character string region as sub-separator.

4. The method according to claim 2 or 3 including the steps of generating pitch data for each of white regions between vertically successive character string regions, and detecting a white region whose pitch is different from the immediately precedent one as sub-separator.

5. The method according to claim 1, 2, 3 or 4 wherein if multiple patterns of object labels that may be assigned to said character strings are generated for a single model, said step (e) calculates a cost for each of said patterns on the basis of spatial relationships of said objects and said sub-separators and determines the most likely assignment pattern on the basis of the result of said calculation.

6. The method according to claim 5 wherein said cost calculation step imposes a penalty if character string regions to which the same object label is assigned continue beyond a sub-separator.

7. The method according to claim 2 wherein a sub-separator is treated as a separator unless a requisite number of separators are detected from said document image.

8. The method of any one of the preceding claims wherein the registered layout model contains data on the spatial relationship of document objects in the model, data on whether each object is mandatory or not, data on the number of character strings which constitute a terminal node and data on the number of immediate successors for each intermediate node.

9. A system for the layout analysis of an input document image comprised of objects arranged in a hierarchical tree structure, the system comprising:

(a) means to register a layout model representing spatial relations of objects in a model document;

(b) means to extract character string regions from the input document image;

(c) means for detecting separators from said document image and generating data on their positions, said separators being white and/or black regions satisfying predetermined conditions;

(d) means for segmenting said document image into tree-structured sub-areas by using said separator data and

(e) means for matching said character string regions with said layout model by using said separators as boundaries.

10. The system of claim 9 further comprising means for detecting sub-separators within each of said sub-areas and generating data on their positions, said sub-separators being white regions satisfying predetermined conditions different from said separators, the matching means being adapted to employ said sub-separators as boundary candidates for objects.

# F I G . 1

```
                          ┌───────┐
                          │ Paper │
                          └───────┘
   ┌────────┬─────────┬──────────┬────────┬─────────┬──────────┬────────┬────────┐
┌──────┐ ┌──────┐ ┌────────┐ ┌──────┐ ┌────────┐ ┌────────┐ ┌──────┐ ┌──────┐
│Header│ │JTitle│ │JAuthor │ │ETitle│ │EAuthor │ │Abstract│ │ Body │ │ Page │
└──────┘ └──────┘ └────────┘ └──────┘ └────────┘ └────────┘ └──────┘ └──────┘
                                                          ┌───────────┴──────────┐
                                                      ┌────────┐ ┌────────┐
                                                      │Column1 │ │Column2 │  ─────
                                                      └────────┘ └────────┘
                                                   ┌──────┴───────┐
                                               ┌────────┐ ┌─────────┐
                                               │M-Block │ │Footnote │
                                               └────────┘ └─────────┘
                                          ┌────────┼────────┐
                                      ┌──────┐ ┌──────┐ ┌──────┐
                                      │Block1│ │Block2│ │Block3│  ────
                                      └──────┘ └──────┘ └──────┘
```

# F I G . 2

| Nest | Name | Man. | Dir. | Element | Min. | Max. | Separ. | Reco. |
|---|---|---|---|---|---|---|---|---|
| 0 | Paper | Yes | Ver | Dummy | 1 | 1 | LRTB | N/A |
| 1 | Header | Yes | Ver | String | 1 | 1 | LRTB | Yes |
| 1 | JTitle | Yes | Ver | String | 1 | 3 | LRT | Yes |
| 1 | JAuthor | Yes | Ver | String | 1 | 3 | LR | Yes |
| 1 | ETitle | Yes | Ver | String | 1 | 3 | LR | Yes |
| 1 | EAuthor | Yes | Ver | String | 1 | 3 | LR B | Yes |
| 1 | Abstract | Yes | Ver | String | 1 | 10 | LRTB | Yes |
| 1 | Body | Yes | Hor | Dummy | 1 | 3 | LRTB | N/A |
| 2 | Column | Yes | Ver | Dummy | 1 | 1 | LRTB | N/A |
| 3 | M-Block | Yes | Ver | Dummy | 1 | 10 | LRTB | N/A |
| 4 | Block | Yes | Ver | String | 1 | N | LRTB | Yes |
| 3 | Footnote | No | Ver | String | 1 | 6 | LRTB | Yes |
| 1 | Page | Yes | Ver | Dummy | 1 | 1 | LRTB | Yes |

# FIG. 3

```
┌─────────────────────────┐
│   INPUT OF DOCUMENT      │ ～ 10
│     IMAGE DATA           │
└─────────────────────────┘
            │
┌─────────────────────────┐
│  EXTRACTION OF CHARACTER │ ～ 12
│  STRINGS AND OTHER BLACK │
│       RECTANGLES         │
└─────────────────────────┘
            │
┌─────────────────────────┐
│      SEPARATOR           │ ～ 14
│      EXTRACTION          │
└─────────────────────────┘
            │
┌─────────────────────────┐
│    CHARACTER AREA        │ ～ 16
│    SEGMENTATION          │
└─────────────────────────┘
            │
┌─────────────────────────┐
│    SUB-SEPARATOR         │ ～ 18
│    EXTRACTION            │
└─────────────────────────┘
            │
┌─────────────────────────┐
│   LABELLING USING        │ ～ 20
│   RELAXATION METHOD      │
└─────────────────────────┘
            │
┌─────────────────────────┐
│      ORDERING            │ ～ 22
└─────────────────────────┘
```

# FIG. 6

| Nest | Name | Man. | Dir. | Element | Min. | Max. | Separ. | Reco. |
|------|------|------|------|---------|------|------|--------|-------|
| 0 | Paper | Yes | Ver | Dummy | 1 | 1 | LRTB | N/A |
| 1 | Title | Yes | Ver | String | 1 | 3 | LRT | Yes |
| 1 | Author | Yes | Ver | String | 1 | 3 | LR | Yes |
| 1 | Affil. | Yes | Ver | String | 1 | 3 | LR | Yes |
| 1 | Body | Yes | Hor | Dummy | 1 | 3 | LRTB | N/A |
| 2 | Column | Yes | Ver | String | 1 | N | LRTB | Yes |

# FIG. 4

A

S1

B

S1

C

C

FIGURE AREA

C1

C2

S1

D

S2

SEPARATOR
-------- SUB-SEPARATOR

# FIG. 5

1 | Ti |

2 | Ti, Au |

— — — — — — — — SUB-SEPARATOR (w1)

3 | Ti, Au, Af |   4 | Ti, Au, Af |

— — — — — — — — SUB-SEPARATOR (w2)

5 | Au, Af |

————————————————— SEPARATOR

6 | BC-1 |   7 | BC-2 |

| | | |

# FIG. 7

1 | It1 |   2 | It1,It2 |   3 | It1,It2,It3 |   4 | It2,It3 |

5 | It1 |   6 | It1,It2 |   7 | It1,It2,It3 |   8 | It2,It3 |

9 | It1 |   10 | It1,It2,It3 |   11 | It2,It3 |

SSP-A        SSP-B        SSP-C

# FIG. 8

| Nest | Name | Man. | Dir. | Element | Min. | Max. | Separ. | Reco. |
|------|------|------|------|---------|------|------|--------|-------|
| 0 | Table | Yes | Ver | Dummy | 1 | 1 | LRTB | N/A |
| 1 | Block1 | Yes | Hor | Dummy | 1 | 1 | LRTB | N/A |
| 2 | Item1 | Yes | Ver | String | 1 | 3 | LR | Yes |
| 2 | Item2 | Yes | Ver | String | 1 | 3 | LR | Yes |
| 2 | Item3 | Yes | Ver | String | 1 | 3 | LR | Yes |

# F I G. 9

| Nest | Name | Man. | Dir. | Element | Min. | Max. | Separ. | Reco. |
|---|---|---|---|---|---|---|---|---|
| 0 | Patent | Yes | Ver | Dummy | 1 | 1 | LRTB | N/A |
| 1 | Header | Yes | Hor | Dummy | 1 | 1 | LR | N/A |
| 2 | Shead1 | Yes | Ver | String | 1 | 1 | LR | No |
| 2 | Shead2 | Yes | Ver | String | 1 | 1 | LR | No |
| 1 | Title | Yes | Hor | Dummy | 1 | 1 | LR | N/A |
| 2 | Stitle | Yes | Ver | String | 1 | 1 | LR | No |
| 2 | ID-no | Yes | Ver | String | 1 | 1 | LR | Yes |
| 1 | Index | Yes | Hor | Dummy | 1 | 1 | LRTB | N/A |
| 2 | Int-code | Yes | Ver | String | 1 | 8 | LRTB | Yes |
| 2 | Symbol | Yes | Ver | String | 1 | 8 | LRTB | Yes |
| 2 | Number | Yes | Ver | String | 1 | 8 | LRTB | Yes |
| 2 | Others | Yes | Ver | String | 1 | 8 | LRTB | Yes |
| 1 | Items | Yes | Ver | String | 1 | 15 | LR | Yes |
| 1 | Body | Yes | Ver | Dummy | 2 | 2 | LRTB | N/A |
| 2 | Column | Yes | Ver | Dummy | 1 | 5 | LRTB | N/A |
| 3 | Block | Yes | Ver | String | 1 | 25 | LRTB | Yes |
| 1 | Page | Yes | Ver | String | 1 | 1 | LRTB | Yes |